(19) Europäisches Patentamt
European Patent Office
Office européen des brevets

(11) **EP 2 975 002 A1**

(12) **EUROPEAN PATENT APPLICATION**
published in accordance with Art. 153(4) EPC

(43) Date of publication:
**20.01.2016  Bulletin 2016/03**

(51) Int Cl.:
**C01B 31/02** (2006.01)   **B01J 20/20** (2006.01)

(21) Application number: **14763195.6**

(22) Date of filing: **12.03.2014**

(86) International application number:
**PCT/JP2014/056538**

(87) International publication number:
**WO 2014/142187 (18.09.2014 Gazette 2014/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **13.03.2013  JP 2013050068**

(71) Applicant: **Toyo Tanso Co., Ltd.
Osaka-shi, Osaka 555-0011 (JP)**

(72) Inventors:
• **ORIKASA, Hironori
Osaka-shi
Osaka 5550011 (JP)**
• **MORISHITA, Takahiro
Osaka-shi
Osaka 555-0011 (JP)**

(74) Representative: **Glawe, Delfs, Moll
Partnerschaft mbB von
Patent- und Rechtsanwälten
Postfach 26 01 62
80058 München (DE)**

(54) **ADSORBING/DESORBING MATERIAL**

(57)   An adsorbing/desorbing agent including porous carbon is provided that can smoothly adsorb or desorb gases and liquids.

An adsorbing/desorbing agent includes a porous carbon having micropores and mesopores and/or macropores, wherein each of the three types of pores has an outer wall made of a carbonaceous wall and the micropores are formed so as to communicate with the mesopores and/or the macropores. The adsorbing/desorbing agent is characterized in that x is within the range $1.0 \times 10^{-5} < x \leq 1.0 \times 10^{-4}$, and the relation between x and y satisfy the following expression (1), where x is a relative pressure (P/Po) measured using nitrogen as an adsorptive gas at 77 K and y is a mass transfer coefficient ($K_{sap}$):

$$y \geq 1.67 \times 10^{-1}x + 2.33 \times 10^{-6}. \qquad \ldots (1)$$

FIG. 5

EP 2 975 002 A1

**Description**

TECHNICAL FIELD

The present invention relates to an adsorbing/desorbing agent.

BACKGROUND ART

Carbon materials are used, for example, in a canister for preventing air pollution by repeatedly adsorbing and desorbing gasoline vapor, or in a chemical heat pump that takes out the heat of reaction produced when a chemical substance undergoes recombination, and that also recirculates and uses the chemical substance. When activated carbon, zeolite, and the like are used as the carbon materials in this case, the carbon materials can easily adsorb gases and show a large adsorption capacity because they have a structure with a large number of small pores formed therein (i.e., a structure with a large surface area). However, they have the problem that desorption of the gases or liquids becomes difficult. On the other hand, carbon materials having larger pores have smaller surface areas than the activated carbon or the like. Therefore, such carbon materials are difficult to adsorb gases and accordingly have less adsorption capacity. Thus, there has not been available a material that can easily adsorb and yet can easily desorb gases.
It may appear possible to solve the foregoing problems by mixing a material having a large surface area (such as activated carbon) and a carbon material having large pores with each other. However, when the two materials are merely mixed to each other, the two materials exist non-uniformly when viewed microscopically, and moreover, the two materials come to separate from each other over time because of the difference in particle size between the two materials. As a consequence, there is a risk that the performance of the canister or the like may deteriorate.
A method of producing an adsorption material by mixing activated carbon, a binder, and a meltable core substance together, molding the mixture, and thereafter sintering the mixture has been disclosed (see Patent Literature 1 below).

CITATION LIST

Patent Literature

[Patent Literature 1] Japanese Published Unexamined Patent Application No. 2011-132903

SUMMARY OF INVENTION

TECHNICAL PROBLEM

The adsorbent for canister disclosed in Patent Literature 1 above has such a structure that a meltable core substance is vaporized, sublimed, or decomposed by the thermal effect at time of sintering so that it substantially disappears, whereby pores of 100 nm or greater are formed. However, when the adsorbent is fabricated in such a method, activated carbon may, in some cases, not necessarily exist near the pores formed by the vaporization or the like of the meltable core substance, or even if it exists, the amount of activated carbon may be non-uniform. This means that the adsorption and desorption of a gas cannot be performed smoothly.
Accordingly, it is an object of the present invention to provide an adsorbing/desorbing agent including porous carbon that can smoothly adsorb or desorb gases and liquids.

SOLUTION TO PROBLEM

In order to accomplish the foregoing object, the present invention provides an adsorbing/desorbing agent comprising a porous carbon having micropores, and mesopores and/or macropores, wherein each of the three types of pores has an outer wall made of a carbonaceous wall and the micropores are formed so as to communicate with the mesopores and/or the macropores, the adsorbing/desorbing agent being characterized in that: x is within the range of $1.0 \times 10^{-5} \leq x \leq 1.0 \times 10^{-4}$, and the relation between x and y satisfy the following expression (1), where x is a relative pressure (P/Po) when measured at 77 K using nitrogen as an adsorptive gas, and y is a mass transfer coefficient ($K_{sap}$):

$$y \geq 1.67 \times 10^{-1}x + 2.33 \times 10^{-6}. \qquad\qquad ...\,(1)$$

It is generally believed that the process that determines the rate of adsorption and desorption of a gas or a liquid to and from a porous solid (such as porous carbon) is the process of mas transfer in the pores or the laminar film. Accordingly, whether the adsorption or desorption rate is high or low can be evaluated by the mass transfer coefficient. As with the above-described configuration, when the relation between relative pressure ($P/P_0$, where P is adsorption equilibrium pressure and $P_0$ is saturation vapor pressure) and mass transfer coefficient ($K_{sap}$) satisfies the expression (1), it means that the adsorption and desorption of a gas or a liquid to and from the porous carbon is performed smoothly. Specifically, the details are as follows. Note that mass transfer coefficient ($K_{sap}$) is an index that indicates the rate of mas transfer when a substance is transferred by a concentration (pressure) difference as a driving force.

When micropores exist in the porous carbon, a gas or a liquid can be easily adsorbed to the porous carbon. On the other hand, when mesopores and/or macropores exist in the porous carbon, the gas or the liquid can be easily desorbed from the porous carbon. However, when the micropores merely exist along with the mesopores and/or the macropores, the gas or liquid cannot move smoothly between the micropores and the mesopores and/or macropores. Consequently, although the porous carbon can adsorb the gas or liquid, it is difficult to desorb the gas or liquid. Nevertheless, when the micropores are formed so as to communicate with the mesopores and/or the macropores as in the foregoing configuration, the gas or liquid adsorbed in the micropores can easily move to the mesopores and/or the macropores. Therefore, the micropores allow the gas or liquid to be easily adsorbed, and at the same time, the mesopores and/or the macropores allow the gas or liquid to be desorbed remarkably smoothly. This enables the relation between relative pressure (P/Po) and mass transfer coefficient ($K_{sap}$) to satisfy the expression (1) as described above.

It should be noted that the reason why x is restricted to be within the range of $1.0 \times 10^{-5} \leq x \leq 1.0 \times 10^{-4}$ is that the adsorption phenomenon to very small micropores such as to be effective as the adsorption sites even at a small relative pressure should be indexed. The reason why the value x is restricted to $1.0 \times 10^{-5} \leq x$ is as follows. It is taken into consideration that, if the value x is excessively small, the pores are so small that the number of effective pores becomes extremely small in many adsorption materials. The reason why the value x is restricted to $x \leq 1.0 \times 10^{-4}$ is as follows. It is taken into consideration that, if the value x is excessively large, not only the adsorption phenomenon to the micropores but also the adsorption phenomenon to larger pores affects the value y.

In the present description herein, the pores having a pore diameter of less than 2 nm are called "micropores," the pores having a pore diameter of from 2 nm to 50 nm are called "mesopores," and the pores having a pore diameter of greater than 50 nm are called "macropores."

It is desirable that the relation between x and y satisfy the following expression (2):

$$y \geq 6.00 \times 10^{-1}x. \qquad\qquad ...\,(2)$$

When the relation satisfies the expression (2), it means that the adsorption and desorption of a gas or a liquid can be performed more smoothly.

It is desirable that the tapped bulk density be from 0.1 g/mL to 0.18 g/mL.

If the tapped bulk density is less than 0.1 g/mL, the absorbable amount per volume is small. On the other hand, if the tapped bulk density exceeds 0.18 g/mL, the amount of the large pores that serve as the diffusion passage for the adsorbed substance is small.

It is desirable that the pore volume be from 1.3 mL/g to 2.1 mL/g, the pore volume being obtained from an adsorbed amount as determined at a relative pressure $P/P_0 = 0.95$ when measured at 77 K using nitrogen as an adsorptive gas.

If the pore volume is less than 1.3 mL/g, the amount of gas or liquid that can be adsorbed per weight is too small. On the other hand, if the pore volume exceeds 2.1 mL/g, the average pore diameter is large, so the amount of micropores, which is effective to adsorb molecules, is too small.

It should be noted that the pore volume herein means the total of the volume of micropores and the volume of the micropores, and it does not include the volume of macropores.

It is desirable that the volume of the macropores determined using the tapped bulk density and the pore volume be from 3.0 mL/g to 10 mL/g.

If the volume of the macropores is less than 3.0 mL/g, the diffusion of gas or liquid in the pores may not be performed smoothly. On the other hand, if the volume of the macropores exceeds 10 mL/g, the amount of gas or liquid that can be adsorbed becomes considerably low.

It is desirable that the volume of the micropores be from 0.2 mL/g to 1.0 mL/g, the volume of the micropores being determined from a nitrogen adsorption isotherm measured at 77K using nitrogen as an adsorptive gas.

If the volume of the micropores is less than 0.2 mL/g, the amount of gas or liquid adsorbed is small, and in particular, it does not function effectively as an adsorbent agent for a gas with a small molecular size. On the other hand, if the volume of the micropores exceeds 1.0 mL/g, it becomes impossible to satisfy the above-described tapped bulk density and the following value of the mesopores.

It is desirable that the volume of the mesopores be from 0.8 mL/g to 1.5 mL/g, the mesopore volume being determined from a nitrogen adsorption isotherm measured at 77K using nitrogen as an adsorptive gas.

If the volume of the mesopores is less than 0.8 mL/g, the diffusion of gas or liquid and the adsorption of relatively large molecules may not be performed smoothly. On the other hand, if the volume of the mesopores exceeds 1.5 mL/g, the volume of the micropores becomes small.

(Other Embodiments)

It is desirable that the carbonaceous wall form a three-dimensional network structure. When the carbonaceous wall has a three-dimensional network structure, the carbonaceous wall does not hinder the flow of gas or liquid. As a result, the adsorption capability with gas or liquid can be improved.

It is desirable that the mesopores be open pores, and that the hollow portions be connected to each other. Such a structure allows gas or liquid to flow more smoothly.

ADVANTAGEOUS EFFECTS OF INVENTION

The present invention makes it possible to provide an adsorbing/desorbing agent including porous carbon that can smoothly adsorb or desorb gas or liquid.

BRIEF DESCRIPTION OF DRAWINGS

[Fig. 1] Fig. 1 illustrates a process of manufacturing a porous carbon according to the present invention, wherein Fig. 1 (a) shows a state in which polyvinyl alcohol and magnesium oxide are mixed, Fig. 1 (b) shows the mixture that has been heat-treated, and Fig. 1(c) shows porous carbon.
[Fig. 2] Fig. 2 is a schematic enlarged view of the porous carbon according to the present invention.
[Fig. 3] Fig. 3 is a TEM (transmission electron microscope) image of a present invention material A.
[Fig. 4] Fig. 4 is a TEM image of a present invention material B.
[Fig. 5] Fig. 5 is a graph showing the relationship of relative pressure and mass transfer coefficient of $N_2$.

DESCRIPTION OF EMBODIMENTS

Hereinbelow, embodiments of the present invention will be described.

A porous carbon of the present invention can be manufactured in the following manner. An organic resin is wet-blended or dry-blended with an oxide (template particles) in a solution or powder state, and the mixture is carbonized at a temperature of, for example, 500°C or higher in a non-oxidizing atmosphere or a reduced pressure atmosphere. The resultant carbide is subjected to a washing treatment to remove the oxide.

The just-described porous carbon has a large number of mesopores having substantially the same size and/or a large number of macropores having substantially the same size. Micropores that communicate with the mesopores and/or the macropores are formed at the locations that face the mesopores and/or the macropores in the carbonaceous walls formed between the mesopores and/or macropores.

Preferable examples of the organic resin include: a polyimide having at least one nitrogen or fluorine atom in its unit structure; a resin having a carbon yield of from 40 weight % to 85 weight %, such as a phenolic resin; and a pitch.

Here, the polyimide containing at least one nitrogen or fluorine atom in its unit structure can be obtained by polycondensation of an acid component and a diamine component. However, in this case, it is necessary that either one of or both of the acid component and the diamine component contain at least one nitrogen atom or fluorine atom.

Specifically, a polyamic acid, which is the precursor of the polyimide, is deposited, and the solvent is removed by heating, to obtain a polyamic acid film. Next, the obtained polyamic acid film is subjected to heat imidization at 200°C or higher, so that the polyimide can be fabricated.

Examples of the diamine include: aromatic diamines including: 2,2-Bis(4-aminophenyl)hexafluoropropane, 2,2'-Bis(trifluoromethyl)-benzidine, and 4,4'-diaminooctafluorobiphenyl; and 3,3'-difluoro-4,4'-diaminodiphenylmethane, 3,3'-difluoro-4,4'-diaminodiphenylether, 3,3'-di(trifluoromethyl)-4,4'-diaminodiphenylether, 3,3'-difluoro-4,4'-diaminodiphenylpropane, 3,3'-difluoro-4,4'-diaminodiphenylhexafluoropropane, 3,3'-difluoro-4,4'-diaminobenzophenone, 3,3',5,5'-

4

tetrafluoro-4,4'-diaminodiphenylmethane, 3,3',5,5'-tetra(trifluoromethyl)-4,4'-diaminodiphenylmethane, 3,3',5,5'-tetrafluoro-4,4'-diaminodiphenylpropane, 3,3',5,5'-tetra(trifluoromethyl)-4,4'-diaminodiphenylpropane, 3,3',5,5'-tetrafluoro-4,4-diaminodiphenylhexafluoropropane, 1,3-diamino-5-(perfluorononenyloxy)benzene, 1,3-diamino-4-methyl-5-(perfluorononenyloxy)benzene, 1,3-diamino-4-methoxy-5-(perfluorononenyloxy)benzene, 1,3-diamino-2,4,6-trifluoro5-(perfluorononenyloxy)benzene, 1,3-diamino-4-chloro-5-(perfluorononenyloxy)benzene, 1,3-diamino-4-pbromo-5-(perfluorononenyloxy)benzene, 1,2-diamino-4-(perfluorononenyloxy)benzene, 1,2-diamino-4-methyl-5-(perfluorononenyloxy)benzene, 1,2-diamino-4-methoxy-5-(perfluorononenyloxy)benzene, 1,2-diamino-3,4,6-trifluoro-5-(perfluorononenyloxy)benzene, 1,2-diamino-4-chloro5-(perfluorononenyloxy)benzene, 1,2-diamino-4-bromo-5-(perfluorononenyloxy)benzene, 1,4-diamino-3-(perfluorononenyloxy)benzene, 1,4-diamino-2-methyl-5-(perfluorononenyloxy)benzene, 1,4-diamino-2-methoxy-5-(perfluorononenyloxy)benzene, 1,4-diamino-2,3,6-trifluoro-5-(perfluorononenyloxy)benzene, 1,4-diamino-2-chloro-5-(perfluorononenyloxy)benzene, 1,4-diamino-2-pbromo-5-(perfluorononenyloxy)benzene, 1,3-diamino-5-(perfluorohexenyloxy)benzene, 1,3-diamino-4-methyl-5-(perfluorohexenyloxy)benzene, 1,3-diamino-4-methoxy-5-(perfluorohexenyloxy)benzene, 1,3-diamino-2,4,6-trifluoro-5-(perfluorohexenyloxy)benzene, 1,3-diamino-4-chloro-5-(perfluorohexenyloxy)benzene, 1,3-diamino-4-bromo-5-(perfluorohexenyloxy)benzene, 1,2-diamino-4-(perfluorohexenyloxy)benzene, 1,2-diamino-4-methyl-5-(perfluorohexenyloxy)benzene, 1,2-diamino-4-methoxy-5-(perfluorohexenyloxy)benzene, 1,2-diamino-3,4,6-trifluoro-5-(perfluorohexenyloxy)benzene, 1,2-diamino-4-chloro-5-(perfluorohexenyloxy)benzene, 1,2-diamino-4-bromo-5-(perfluorohexenyloxy)benzene, 1,4-diamino-3-(perfluorohexenyloxy)benzene, 1,4-diamino-2-methyl-5-(perfluorohexenyloxy)benzene, 1,4-diamino-2-methoxy-5-(perfluorohexenyloxy)benzene, 1,4-diamino-2,3,6-trifluoro-5-(perfluorohexenyloxy)benzene, 1,4-diamino-2-chloro-5-(perfluorohexenyloxy)benzene, 1,4-diamino-2-bromo-5-(perfluorohexenyloxy)benzene; and p-phenylenediamine (PPD) and dioxydianiline, which do not contain fluorine atoms. It is also possible that two or more of the foregoing aromatic diamines may be used in combination as the diamine component.

Examples of the acid component include: 4,4'-(hexafluoroisopropylidene)diphthalic anhydride (6FDA), which contains fluorine atoms; and 3,4,3',4'-biphenyltetracarboxylic dianhydride (BPDA) and pyromellitic dianhydride (PMDA), which contains no fluorine atom.

Examples of the organic solvent used as the solvent for the polyimide precursor include N-methyl-2-pyrrolidone and dimethylformamide.

The technique for imidization may follow either heat imidization or chemical imidization, as indicated by known methods [for example, see "Shin Kobunshi Jikkengaku, Vol. 3, Kobunshi no Gosei·Hanno (2)" (Experimental Polymer Science, New Edition, Vol. 3, Synthesis and reaction of polymers [2]), edited by Society of Polymer Science, Japan, Kyoritsu Shuppan, Tokyo, March 28, 1996, p. 158]. These methods of imidization do not limit the present invention.

Furthermore, it is possible to use a resin having a carbon yield of 40% or higher, such as petroleum-based tar pitch and an acrylic resin, other than the polyimide.

Examples of the source material used as the above-mentioned oxide include metal organic acids the state of which changes into magnesium oxide during the thermal decomposition process by a heat treatment (such as magnesium citrate, magnesium oxalate, calcium citrate, and calcium oxalate), in addition to alkaline-earth metal oxides (such as magnesium oxide and calcium oxide).

As the cleaning solution for removing the oxide, it is preferable to use a dilute acid of 2 mol/L or lower of a common inorganic acid, such as hydrochloric acid, sulfuric acid, nitric acid, citric acid, acetic acid, and formic acid. It is also possible to use hot water of 80°C or higher.

Specifically, it is preferable that the diameter of the oxide (template particles) be from 10 nm to 5 $\mu$m, more preferably from 50 nm to 5 $\mu$m. If the diameter of the oxide is too small, the resluting macropores may become too small. On the other hand, if the diameter of the oxide is too large, the surface area of the porous carbon may become too small.

It is desirable that the weight proportion of the oxide (template particles) and the organic resin be in the range from 1 : 9 to 9 : 1, more desirably in the range from 3 : 7 to 8 : 2, and still more desirably in the range from 5 : 5 to 7 : 3.

EXAMPLES

(Example 1-1)

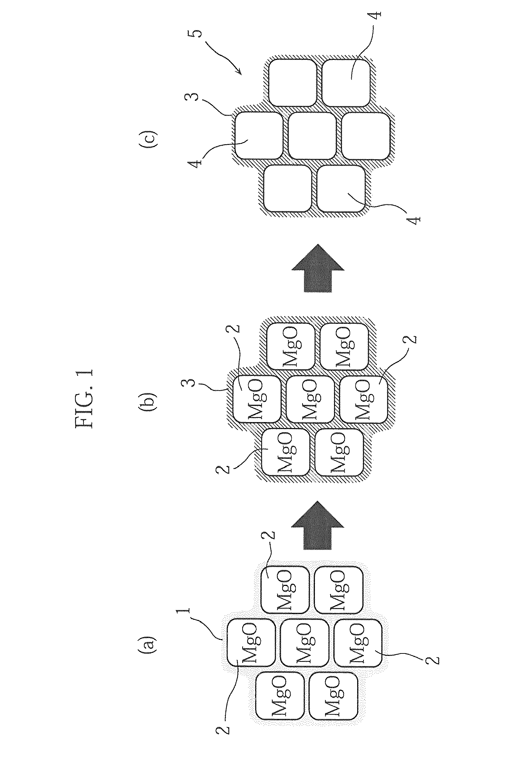

First, as illustrated in Fig. 1 (a), magnesium oxide 2 (MgO, average particle size 50 nm) as template particles, and polyvinyl alcohol 1 as a carbon precursor were mixed at a weight ratio of 3 : 2. Next, as illustrated in Fig. 1(b), this mixture was heat-treated in a nitrogen atmosphere at 1000°C for 2 hours, to allow the polyvinyl alcohol to undergo heat decomposition. Thereby, a sintered substance provided with a carbonaceous wall 3 was obtained. Next, as illustrated in Fig. 1(c), the resultant sintered substance was washed with a sulfuric acid solution added at a concentration of 1 mol/L, to completely dissolve away the MgO. Thereby, a non-crystalline porous carbon 5 having a multiplicity of mesopores (or macropores) 4 with a pore diameter of about 50 nm was obtained.

The porous carbon material fabricated in this manner is hereinafter referred to as a present invention material A.

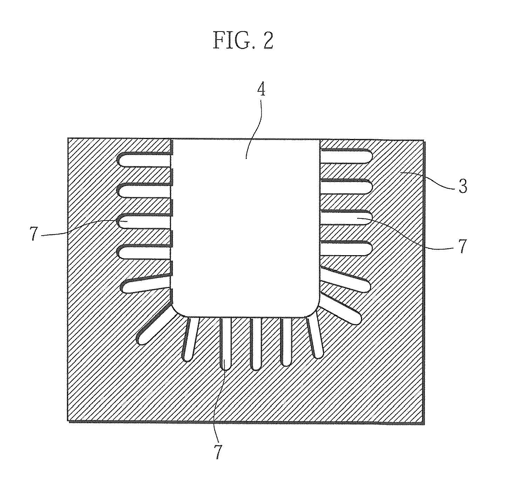

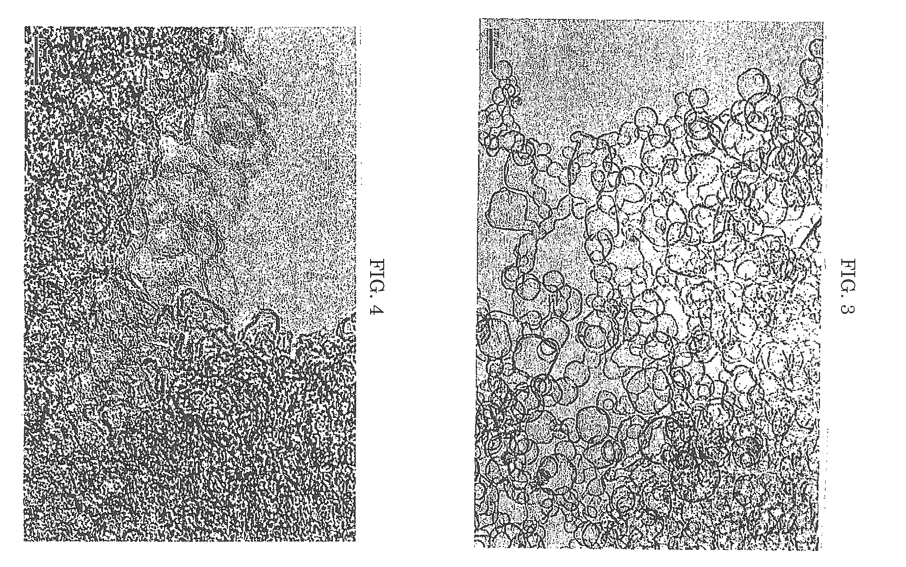

As shown in Fig. 3 (the scale bar at the bottom left corner of the photograph denotes 100 nm), it was confirmed that the present invention material A had a three-dimensional network structure (spongy carbon shape), the mesopores (or macropores) were open pores, and the hollow portions were connected to each other. In addition, when the mesopore (or macropore) is enlarged, it is confirmed that, as illustrated in Fig. 2, a large number of micropores 7 communicating with the mesopore (or macropore) 4 were formed in the carbonaceous wall 3 that forms the outer wall of the mesopore (or macropore) 4.

(Example 1-2)

Another lot of porous carbon was fabricated in the same method as described in Example 1-1 above.
The porous carbon material fabricated in this manner is hereinafter referred to as a present invention material A'.

(Example 2-1)

A porous carbon was fabricated in the same manner as described in Example 1 above, except that the porous carbon was fabricated by heat-treating magnesium citrate nonahydrate, which serves both as the template particles and the carbon precursor, not by mixing the template particles and the carbon precursor together and then heat-treating the mixture. It should be noted that in the citric acid nonahydrate, the citric acid portion serves as the carbon precursor and the magnesium portion serves as the template precursor.
The porous carbon material fabricated in this manner is hereinafter referred to as a present invention material B.
As shown in Fig. 4 (the scale bar at the bottom left corner of the photograph denotes 10 nm), it was confirmed that the present invention material B had a three-dimensional network structure (spongy carbon shape), and the pores directly formed from the template particles were mesopores, since the diameter of the pores from which the template particles had been removed was about 10 nm. It should be noted, however, that the material has such a structure that the mesopores are open pores and the hollow portions are connected to each other, as in the case of the present invention material A.
In the present invention material A, the macropores may be formed directly from the template particles, but it is also possible that the macropores may be formed by mesopores combined with each other. In addition, when the mesopore (or macropore) of the present invention material B was enlarged, it was confirmed that a large number of micropores communicating with the mesopore (or macropore) were formed in the carbonaceous wall that formed the outer wall of the mesopore (or macropore), as in the case of the present invention material A.

(Example 2-2)

Another lot of porous carbon was fabricated in the same method as described in Example 2-1 above.
The porous carbon material fabricated in this manner is hereinafter referred to as a present invention material B'.

(Comparative Example 1)

A Y-type zeolite (HS-320 made by Wako Pure Chemical Industries, Ltd.) was used for Comparative Example 1.
This material is hereinafter referred to as a comparative material Z.

(Comparative Example 2)

Activated carbon was fabricated in the following manner. A phenolic resin was used as the source material, and the source material was heat-treated in a nitrogen gas flow at 900°C for 1 hour. Thereafter, the resultant material was subjected to an activation treatment in a water vapor gas flow at 900°C for 1 hour, to thus fabricate activated carbon.
This material is hereinafter referred to as a comparative material Y.

(Experiment 1)

BET specific surface area, micropore volume, mesopore volume, pore volume based on an adsorption method, macropore volume, and tapped bulk density were determined in the following manner, for the present invention materials A, A', B, and B' as well as the comparative materials Y and Z. The results are also shown in Table 1.

(1) Derivation of BET Specific Surface Area, Pore Volume based on Adsorption Method, Micropore Volume, and Mesopore Volume from Nitrogen Adsorption Isotherm Measured at 77 K Using nitrogen as Adsorptive Gas

A nitrogen adsorption isotherm at 77 K was obtained, and the BET specific surface area and so forth were obtained from the analysis of the nitrogen adsorption isotherm. The pore volume based on the adsorption method was determined from the adsorbed amount at a relative pressure (P/Po) of 0.95, and the micropore volume was determined by the Dubinin-Astakhov (DA) method. The mesopore volume was obtained from the difference between the pore volume and the volume of micropores.

(2) Estimation of Macropore Volume

The macropore volume cannot be obtained by the nitrogen absorption method. For this reason, the macropore volume was obtained from the bulk density and the micropore volume and the mesopore volume that were determined by a nitrogen absorption method. In this case, the calculation was made assuming that the absolute specific gravity of carbon is 2.0 g/mL.

(3) Measurement of tapped bulk density

Using a tapping machine, tapping was carried out until measured values stabilized sufficiently, and thereafter, the weight and the volume of each of the materials were measured. Thereby, the tapped bulk density was measured.

TABLE 1

| Material | BET specific surface area $(m^2/g)$ | Micropore volume (mL/g) | Mesopore volume (mL/g) | Pore volume determined by adsorption method (mL/g) | Macropore volume (mL/g) | Tapped bulk density (g/cc) |
|---|---|---|---|---|---|---|
| A | 620 | 0.29 | 1.23 | 1.52 | 6.3 | 0.12 |
| A' | 580 | 0.25 | 1.31 | 1.56 | 7.6 | 0.1 |
| B | 1620 | 0.79 | 1.05 | 1.84 | 3.9 | 0.16 |
| B' | 1530 | 0.74 | 1.01 | 1.75 | 4.1 | 0.13 |
| Z | 810 | 0.36 | 0.03 | 0.39 | - | - |
| Y | 1320 | 0.51 | 0.21 | 0.73 | 2.1 | 0.09 |

As will be clearly understood from reviewing Table 1, the present invention materials A, A', B, and B' have greater pore volumes and greater mesopore volumes than those of the comparative materials Y and Z. Moreover, in the present invention materials A, A', B, and B', micropores also developed to a certain degree, and they had a sufficiently large BET specific surface area, 580 mL/g or greater. Furthermore, it is demonstrated that each of the present invention materials A, A', B, and B' has a significantly large macropore volume, and this leads to a low tapped bulk density.

(Experiment 2)

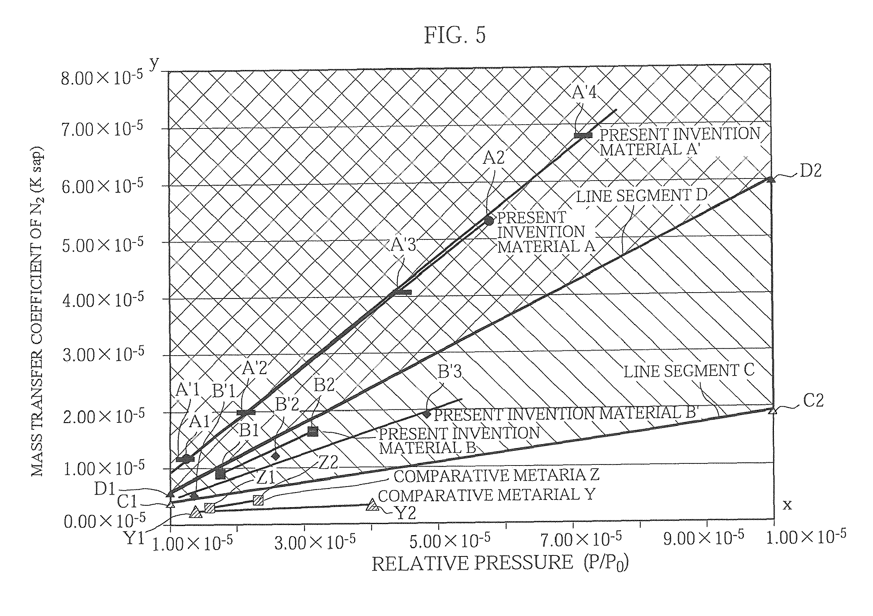

The relation between x and y was investigated in the following manner, where x is a relative pressure (P/Po) when measured at 77 K using nitrogen as an adsorptive gas, and y is a mass transfer coefficient ($K_{sap}$). The results are shown in Tables 2 and 3 and Fig. 5.

- Derivation of Mass Transfer Coefficient ($K_{sap}$) by LDF Approximation

The pressure change of nitrogen until a state of adsorption equilibrium was reached was adjusted based on a simplified Linear Driving Force (LDF) model, which is used for obtaining the mass transfer coefficient, and thus, the mass transfer coefficient ($K_{sap}$) of nitrogen was determined. Then, mass transfer coefficients ($K_{sap}$) at different relative pressures (P/P0) were obtained at two points for each of the materials (at four points for the material A' and at three points for the material B'). The results are shown in Table 2.

TABLE 2

| Material | Surveyed point | P/Po (x) | $K_{sap}$ (y) |
|---|---|---|---|
| A | A1 | $1.22 \times 10^{-5}$ | $1.18 \times 10^{-5}$ |
| | A2 | $5.77 \times 10^{-5}$ | $5.33 \times 10^{-5}$ |
| A' | A'1 | $1.20 \times 10^{-5}$ | $1.17 \times 10^{-5}$ |
| | A'2 | $2.11 \times 10^{-5}$ | $1.99 \times 10^{-5}$ |
| | A'3 | $4.48 \times 10^{-5}$ | $4.08 \times 10^{-5}$ |
| | A'4 | $7.21 \times 10^{-5}$ | $6.80 \times 10^{-5}$ |
| B | B1 | $1.75 \times 10^{-5}$ | $8.98 \times 10^{-6}$ |
| | B2 | $3.12 \times 10^{-5}$ | $1.63 \times 10^{-5}$ |
| B' | B'1 | $1.35 \times 10^{-5}$ | $5.10 \times 10^{-6}$ |
| | B'2 | $2.56 \times 10^{-5}$ | $1.24 \times 10^{-5}$ |
| | B'3 | $4.80 \times 10^{-5}$ | $1.92 \times 10^{-5}$ |
| Z | Z1 | $1.57 \times 10^{-5}$ | $3.00 \times 10^{-6}$ |
| | Z2 | $2.30 \times 10^{-5}$ | $4.29 \times 10^{-6}$ |
| Y | Y1 | $1.37 \times 10^{-5}$ | $2.50 \times 10^{-6}$ |
| | Y2 | $4.00 \times 10^{-5}$ | $3.29 \times 10^{-6}$ |

As clearly seen from Table 2, the present invention materials A, A', B, and B' show relatively large mass transfer coefficients. In particular, the mass transfer coefficients of the present invention materials A and A' are remarkably large. More specifically, the mass transfer coefficients of the present invention materials A and A' were 2 to 5 times the mass transfer coefficient of the conventionally-used activated carbon. It is believed that the present invention materials A, A', B, and B' show large mass transfer coefficients because they can improve the volumes of the mesopores and the macropores (in particular they can improve the volume of the macropores) while they keep the volume of the micropores to be relatively large, as shown in the foregoing experiment 1.

Next, because the relation between the relative pressure ($P/P_0$) and the mass transfer coefficient ($K_{sap}$) is in a positive relation, each of the line segments for the materials A, B, Y, and Z (for example, a line segment connecting the surveyed point A1 and the surveyed point A2 to each other is for the material A) is represented as $y = ax + b$, and the values for the respective surveyed points are substituted into the equation, to calculate the values a and b. It should be noted that, for the materials A' and B', the values a and b were calculated by drawing an approximation curve from the four, or three, surveyed points.

As a result, it was found that $a = 9.12 \times 10^{-1}$ and $b = 6.73 \times 10^{-7}$ in the present invention material A. Therefore, the line segment connecting the surveyed points A1 and A2 to each other (hereinafter also referred to as the line segment A) can be represented as $y = 9.12 \times 10^{-1}x + 6.73 \times 10^{-7}$. This line segment A is shown in Fig. 5.

Furthermore, in the present invention material A', $a = 9.34 \times 10^{-1}$ and $b = 8.42 \times 10^{-8}$, and the line segment A' represented as $y = 9.34 \times 10^{-1}x + 8.42 \times 10^{-8}$ is obtained. This line A' is also shown in Fig. 5.

Likewise, in the present invention material B, $a = 5.34 \times 10^{-1}$ and $b = -3.70 \times 10^{-7}$. Therefore, the line segment connecting the surveyed points B1 and B2 to each other (hereinafter also referred to as the line segment B) can be represented as $y = 5.34 \times 10^{-1}x - 3.70 \times 10^{-7}$. This line segment B is also shown in Fig. 5.

Furthermore, in the present invention material B', $a = 3.98 \times 10^{-1}$ and $b = 5.52 \times 10^{-7}$, and the line B' represented as $y = 3.98 \times 10^{-1}x + 5.52 \times 10^{-7}$ is obtained. This line B is also shown in Fig. 5.

Also, in the comparative material Z, $a = 1.77 \times 10^{-1}$ and $b = 2.26 \times 10^{-7}$. Therefore, the line segment connecting the surveyed points Z1 and Z2 to each other (hereinafter also referred to as the line segment Z) can be represented as $y = 1.77 \times 10^{-1}x + 2.26 \times 10^{-7}$. This line segment Z is also shown in Fig. 5.

Furthermore, in the comparative material Y, $a = 3.00 \times 10^{-2}$ and $b = 2.09 \times 10^{-6}$. Therefore, the line segment connecting the surveyed points Y1 and Y2 to each other (hereinafter also referred to as the line segment Y) can be represented as $y = 3.00 \times 10^{-2}x + 2.09 \times 10^{-6}$. This line segment Y is shown in Fig. 5.

Next, the line segment C is obtained. The line segment C is above the line segment Y and the line segment Z but below the line segment B and the line segment B, and it does not intersect with the line segments B, B', Y, and Z in the range of $1.0 \times 10^{-5} \leq x \leq 1.0 \times 10^{-4}$. The reason why the value x is restricted to $1.0 \times 10^{-5} \leq x$ is as follows. It is taken into consideration that, if the value x is excessively small, the pores are so small that the number of effective pores becomes extremely small in many adsorption materials. The reason why the value x is restricted to $x \leq 1.0 \times 10^{-4}$ is as follows. It is taken into consideration that, if the value x is excessively large, not only the adsorption phenomenon to the micropores but also the adsorption phenomenon to larger pores affects the value y.

Furthermore, the line segment D is obtained. The line segment D is above the line segment B and the line segment B' but below the line segment A and the line segment A', and the line segment D does not intersect with the line segments A, A', B, and B' in the range of $1.0 \times 10^{-5} \leq x \leq 1.0 \times 10^{-4}$. The above-described line segments C and D are also shown in Fig. 5.

Herein, the above-described line segments C and D were obtained in the following manner. First, the mass transfer coefficients ($K_{sap}$) at relative pressures (P/Po) of $1.00 \times 10^{-5}$ and $1.00 \times 10^{-4}$ were set as shown in Table 3 below.

TABLE 3

| Line segment | Set point | $P/P_0$ (x) | $K_{sap}$ (y) |
|---|---|---|---|
| Line segment C | C1 | $1.00 \times 10^{-5}$ | $4.00 \times 10^{-6}$ |
| | C2 | $1.00 \times 10^{-4}$ | $1.90 \times 10^{-5}$ |
| Line segment D | D1 | $1.00 \times 10^{-5}$ | $6.00 \times 10^{-6}$ |
| | D2 | $1.00 \times 10^{-4}$ | $6.00 \times 10^{-5}$ |

Next, each of the line segments C and D are represented as $y = ax + b$, and the values at the respective set points are substituted into the equation, to calculate the values a and b.

As a result, it was found that in the line segment C, $a = 1.67 \times 10^{-1}$ and $b = 2.33 \times 10^{-6}$. Therefore, the line segment C connecting the set points C1 and C2 to each other can be represented as $y = 1.67 \times 10^{-1}x + 2.33 \times 10^{-6}$.

Likewise, it was found that in the line segment D, $a = 6.00 \times 10^{-1}$ and $b = 0$. Therefore, the line segment D connecting the set points D1 and D2 to each other can be represented as $y = 6.00 \times 10^{-1}x$.

Then, it is necessary that the mass transfer coefficient ($K_{sap}$) exist in the range above the line segment C (the negative-slope hatched area in Fig. 5), which is represented as $y = 1.67 \times 10^{-1}x + 2.33 \times 10^{-6}$. Therefore, this can be represented by the numerical expression $y \geq 1.67 \times 10^{-1}x + 2.33 \times 10^{-6}$. Moreover, it is particularly desirable that the mass transfer coefficient ($K_{sap}$) exist in the range above the line segment D (the positive-slope hatched area in Fig. 5), which is represented as $y = 6.00 \times 10^{-1}x$. Therefore, this can be represented by the numerical expression $y \geq 6.00 \times 10^{-1}x$.

In addition, the $K_{sap}$ (y) values at $x = 1.0 \times 10^{-5}$ (lower limit) and at $x = 1.0 \times 10^{-4}$ (upper limit) were obtained for the line segments A, A', B, B', C, D, Y, and Z. The results are shown in Table 4.

TABLE 4

| Line segment | $K_{sap}$(y) value | |
|---|---|---|
| | $x = 1.0 \times 10^{-5}$ | $x = 1.0 \times 10^{-4}$ |
| A | $9.79 \times 10^{-6}$ | $9.19 \times 10^{-5}$ |
| A' | $9.42 \times 10^{-6}$ | $9.35 \times 10^{-5}$ |
| D | $6.00 \times 10^{-6}$ | $6.00 \times 10^{-5}$ |
| B | $4.97 \times 10^{-6}$ | $5.31 \times 10^{-5}$ |
| B' | $4.53 \times 10^{-6}$ | $4.04 \times 10^{-5}$ |
| C | $4.00 \times 10^{-6}$ | $1.90 \times 10^{-5}$ |
| z | $1.89 \times 10^{-6}$ | $1.79 \times 10^{-5}$ |
| Y | $2.39 \times 10^{-6}$ | $5.09 \times 10^{-6}$ |

Table 4 above clearly demonstrates that the values of $K_{sap}$ (y) in the cases where $x = 1.0 \times 10^{-5}$ and $x = 1.0 \times 10^{-4}$ are: line segment A, A' > line segment D > line segment B, B' > line segment C > line segment Y, Z.

INDUSTRIAL APPLICABILITY

The present invention is applicable to, for example, canisters and chemical heat pump gases.

REFERENCE SIGNS LIST

1    Polyvinyl alcohol
2    Magnesium oxide
3    Carbonaceous wall
4    Mesopore (macropore)
5    Porous carbon
6    Micropore

**Claims**

1.  An adsorbing/desorbing agent comprising a porous carbon having micropores and mesopores and/or macropores, wherein each of the three types of pores has an outer wall made of a carbonaceous wall and the micropores are formed so as to communicate with the mesopores and/or the macropores, the adsorbing/desorbing agent being **characterized in that**:

    x is within the range of $1.0 \times 10^{-5} \leq x \leq 1.0 \times 10^{-4}$, and the relation between x and y satisfy the following expression (1), where x is a relative pressure (P/Po) when measured at 77 K using nitrogen as an adsorptive gas, and y is a mass transfer coefficient ($K_{sap}$):

$$y \geq 1.67 \times 10^{-1}x + 2.33 \times 10^{-6}. \qquad\qquad \dots (1)$$

2.  The adsorbing/desorbing agent according to claim 1, wherein x and y satisfy the following expression (2):

$$y \geq 6.00 \times 10^{-1}x. \qquad\qquad \dots (2)$$

3.  The adsorbing/desorbing agent according to claim 1 or 2, having a tapped bulk density of from 0.1 g/mL to 0.18 g/mL.

4.  The adsorbing/desorbing agent according to any one of claims 1 through 3, having a pore volume of from 1.3 mL/g to 2.1 mL/g, the pore volume being determined from an adsorbed amount at a relative pressure P/Po = 0.95 when measured at 77 K using nitrogen as an adsorptive gas.

5.  The adsorbing/desorbing agent according to claim 4, having a macropore volume of from 3.0 mL/g to 10 mL/g, the macropore volume being determined using a tapped bulk density and the pore volume.

6.  The adsorbing/desorbing agent according to claim 4 or 5, having a micropore volume of from 0.2 mL/g to 1.0 mL/g, the micropore volume being determined from a nitrogen adsorption isotherm measured at 77 K using nitrogen as an adsorptive gas.

7.  The adsorbing/desorbing agent according to any one of claims 4 through 6, having a mesopore volume of from 0.8 mL/g to 1.5 mL/g, the mesopore volume being determined from a nitrogen adsorption isotherm measured at 77 K using nitrogen as an adsorptive gas.

FIG. 1

(a)  (b)  (c)

FIG. 2

FIG. 3

FIG. 4

FIG. 5

## INTERNATIONAL SEARCH REPORT

| International application No. |
|---|
| PCT/JP2014/056538 |

**A. CLASSIFICATION OF SUBJECT MATTER**
*C01B31/02*(2006.01)i, *B01J20/20*(2006.01)i

According to International Patent Classification (IPC) or to both national classification and IPC

**B. FIELDS SEARCHED**

Minimum documentation searched (classification system followed by classification symbols)
C01B31/00-31/02, B01J20/20, B01D53/34, B01D53/62

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2010/104102 A1 (Toyo Tanso Co., Ltd.), 16 September 2010 (16.09.2010), paragraphs [0001], [0008] to [0032]; claims; fig. 1 to 6 & JP 2010-208887 A      & US 2011/0318254 A1 & EP 2407423 A1       & CN 102325721 A & TW 201105575 A      & KR 10-2011-0128324 A | 1-7 |
| A | WO 2012/121363 A1 (Toyo Tanso Co., Ltd.), 13 September 2012 (13.09.2012), paragraphs [0001], [0008] to [0014], [0031] to [0043], [0049] to [0050], [0056] to [0057]; claims; fig. 1 to 4 & JP 2012-188309 A       & JP 2012-188310 A & JP 2012-188311 A       & TW 201302608 A | 1-7 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered   to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 June, 2014 (10.06.14) | 17 June, 2014 (17.06.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

## EP 2 975 002 A1

**INTERNATIONAL SEARCH REPORT**

International application No.

PCT/JP2014/056538

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2012-218999 A (Toyo Tanso Co., Ltd.), 12 November 2012 (12.11.2012), claims; paragraphs [0009] to [0010], [0020] to [0035], [0051] to [0052], [0060] (Family: none) | 1-7 |
| A | WO 2010/147087 A1 (Toyo Tanso Co., Ltd.), 23 December 2010 (23.12.2010), paragraphs [0006] to [0007], [0020] to [0023], [0026] to [0034]; claims; fig. 1, 4 & US 2012/0077670 A1    & EP 2444369 A1 & CN 102414122 A         & TW 201119939 A & KR 10-2012-0039517 A | 1-7 |
| A | JP 2001-224958 A (Isuzu Ceramics Research Institute Co., Ltd.), 21 August 2001 (21.08.2001), paragraphs [0009], [0011]; fig. 1, 2 & US 2001/0027164 A1    & EP 1125631 A2 | 1-7 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011132903 A

**Non-patent literature cited in the description**

- Shin Kobunshi Jikkengaku, Vol. 3, Kobunshi no Gosei·Hanno (2). Experimental Polymer Science. 28 March 1996, vol. 3, 158